# EUROPÄISCHE PATENTSCHRIFT

(11) **EP 2 958 777 B1**
(45) Veröffentlichungstag und Bekanntmachung des Hinweises auf die Patenterteilung: **17.02.2021**
(21) Anmeldenummer: 13805331.9
(22) Anmeldetag: 09.12.2013
(51) Int. Cl.: B60S 1/38

(54) **WISCHVORRICHTUNG**
WIPER DEVICE
DISPOSITIF D'ESSUIE-GLACE

(30) Priorität: 28.12.2012 DE 102012224472
(43) Veröffentlichungstag der Anmeldung: 30.12.2015
(73) Patentinhaber: Robert Bosch GmbH, 70442 Stuttgart (DE)
(72) Erfinder: ERNST, Waldemar, 71665 Vaihingen / Enz (DE); SAUTER, Christian, 76137 Karlsruhe (DE)
(86) Internationale Anmeldenummer: PCT/EP2013/075936
(87) Internationale Veröffentlichungsnummer: WO 2014/102052

(56) Entgegenhaltungen:
- WO-A1-80/01155
- DE-A1-102011 102 408
- DE-A1-102012 210 094
- FR-A1- 2 806 993
- FR-A1- 2 963 765
- US-B1- 6 763 546

## Beschreibung

In den Druckschriften DE 1 170 806 B, DE 27 05 700 A1 DE 10 2011 102 408 A1 und DE 43 17 833 A2 sind bereits Wischblätter von Scheibenwischern mit einer Wischleisteneinheit, die eine erste Wischlippe und eine zweite Wischlippe aufweisen, vorgeschlagen worden. Ein Wechsel zwischen Wischlippen wird hierbei durch eine Reibung mit einer Scheibe bei einer Umkehr einer Bewegung eines Wischblatts erreicht.

### Offenbarung der Erfindung

Die Erfindung geht aus von einer Wischvorrichtung mit zumindest einer Wischleisteneinheit, die eine erste Wischlippe und zumindest eine zweite Wischlippe aufweist.

Es wird zumindest eine selbsttätig aktive Wischlippenwechseleinheit vorgeschlagen, die dazu vorgesehen ist, eine in zumindest einem Teilvorgang eines Wischvorgangs aktive Wischlippe zu wechseln.

Unter einer "Wischleisteneinheit" soll insbesondere eine Einheit aus einem elastischen Material verstanden werden, die dazu vorgesehen ist, zu einer Reinigung einer zu reinigenden Oberfläche, insbesondere einer Scheibenoberfläche, vorzugsweise eine Oberfläche einer Fahrzeugscheibe, an die zu reinigende Oberfläche angepresst und in einem Kontakt über die zu reinigende Oberfläche bewegt zu werden. Bevorzugt ist das elastische Material der Wischleisteneinheit von einem natürlichen oder künstlichen Elastomermaterial, insbesondere von Gummi, gebildet. Unter einer "Wischlippe" soll insbesondere ein Element aus Elastomermaterial mit einem sich vorteilhaft verjüngenden Kontaktbereich zu einer Scheibe verstanden werden, wobei der Kontaktbereich dazu vorgesehen ist, in einem Kontakt mit einer Scheibe über die Scheibe bewegt zu werden, um die Scheibe von Verschmutzungen und Flüssigkeiten, insbesondere Regenwasser oder Wischflüssigkeit, zu reinigen. Vorzugsweise ist die Wischlippe einstückig mit der Wischleisteneinheit ausgebildet und besonders bevorzugt in einem Stück mit der Wischleisteneinheit hergestellt. Unter einer "ersten Wischlippe" und einer "zweiten Wischlippe" sollen insbesondere zwei Wischlippen derselben Wischleisteneinheit verstanden werden, die vorzugsweise an entgegengesetzten Seiten der Wischleisteneinheit angeordnet sind. Unter einer "selbsttätig aktiven Wischlippenwechseleinheit" soll insbesondere eine Einheit verstanden werden, die zumindest ein motorisch aktives Element aufweist, mit dem zumindest ein Bauteil eines Wischblatts, insbesondere einer Wischleisteneinheit, aktiv bewegt werden kann, um zumindest eine Wischlippe zu wechseln. Unter "aktiv bewegen" soll insbesondere verstanden werden, dass die Bewegung des Bauteils des Wischblatts verschieden ist von einer durch einen Wischarm bewirkten Bewegung des Wischblatts über die Scheibe und von einer durch eine Wechselwirkung einer Scheibenoberfläche mit dem durch den Wischarm bewegten Wischblatt bewirkten Bewegung von Bauteilen des Wischblatts, insbesondere von einem Umknicken einer Wischlippe durch einen Richtungswechsel in einem Wendevorgang eines Wischvorgangs.

Unter einer "aktiven Wischlippe" soll insbesondere eine Wischlippe verstanden werden, welche in wenigstens einem Wischzug zumindest einen Großteil von Flüssigkeiten von der Scheibe entfernt. Unter einer "Wischlippe, welche zumindest einen Großteil von Flüssigkeiten von der Scheibe entfernt" soll insbesondere eine Wischlippe verstanden werden, mittels der zumindest sechzig Prozent, vorteilhaft zumindest fünfundsiebzig Prozent und bevorzugt zumindest neunzig Prozent eines Volumens von in wenigstens einem Teilvorgang einer Scheibenreinigung, insbesondere während wenigstens eines Wischzugs von einer Seite zu einer anderen Seite, entfernten Flüssigkeit entfernt wird. Insbesondere ist als aktive Wischlippe eine Wischlippe von zwei oder mehr unterschiedliche Wischlippen wirksam, welche sich in Kontakt zu einer Scheibe befindet, wogegen andere Wischlippen der zwei oder mehr Wischlippen kontaktfrei zu der Scheibe angeordnet sind. Unter einem "Wischvorgang" soll insbesondere ein Vorgang verstanden werden, bei dem ein Wischblatt eines Scheibenwischers von einer Ausgangsstellung an einer Scheibe aus in einem Wischzug in einer Richtung über die Scheibe geführt wird, in einem Wendevorgang eine Bewegungsrichtung des Wischblatts umgekehrt wird und das Wischblatt in einem Wischzug in Gegenrichtung in die Ausgangsstellung zurückgeführt wird. Unter einem "Teilvorgang eines Wischvorgangs" soll insbesondere ein Wischzug oder ein Wendevorgang verstanden werden. Unter "eine zumindest in einem Teilvorgang eines Wischvorgangs aktive Wischlippe zu wechseln" soll insbesondere verstanden werden, dass in unterschiedlichen Teilvorgängen eines Wischprozesses, insbesondere in unterschiedlichen Wischzügen, unterschiedliche Wischlippen als aktive Wischlippen wirksam sind und diese von der selbsttätig aktiven Wischlippenwechseleinheit durch eine aktive Bewegung gewechselt werden. Insbesondere kann ein Wechsel der aktiven Wischlippe zwischen zwei Wischzügen vorgesehen sein und in einem Wendevorgang stattfinden. Grundsätzlich ist es auch möglich, eine Mehrzahl von Wischzügen mit derselben aktiven Wischlippe durchzuführen und die aktive Wischlippe erst nach mehreren Wischzügen und Wendevorgängen zu wechseln. Unter "vorgesehen" soll insbesondere speziell ausgelegt, ausgestattet und/oder programmiert verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch die erfindungsgemäße Ausgestaltung der Wischvorrichtung kann insbesondere ein Wendeschlag der Wischleisteneinheit bei einem Wechsel einer Wischrichtung vermieden und eine geringe mechanische Belastung der Wischleisteneinheit erreicht werden.

Ferner wird vorgeschlagen, dass die selbsttätig aktive Wischlippenwechseleinheit dazu vorgesehen ist, die Wischleisteneinheit in einem Wendevorgang zumindest teilweise zu bewegen. Unter "zumindest teilweise zu bewegen" soll insbesondere verstanden werden, dass die selbsttätig aktive Wischlippenwechseleinheit dazu vorgesehen ist, zumindest ein Teilelement, insbesondere die zumindest eine erste Wischlippe und/oder die zumindest eine zweite Wischlippe, oder die Wischleisteneinheit im Ganzen aktiv zu bewegen. Es kann insbesondere auf einfach durchführbare Weise ein Wechsel einer aktiven Wischlippe durch die selbsttätig aktive Wischlippenwechseleinheit erreicht werden.

Ferner wird vorgeschlagen, dass die selbsttätig aktive Wischlippenwechseleinheit dazu vorgesehen ist, zwischen einem ersten Betriebszustand, in dem die zumindest eine erste Wischlippe als aktive Wischlippe wirksam ist und die zumindest eine zweite Wischlippe kontaktfrei zu einer Scheibe angeordnet ist, und einem zweiten Betriebszustand, in dem die zumindest eine zweite Wischlippe als aktive Wischlippe wirksam ist und die zumindest eine erste Wischlippe kontaktfrei zu der Scheibe angeordnet ist, zu wechseln. Ein Wechsel zwischen dem ersten Betriebszustand und dem zweiten Betriebszustand kann insbesondere dadurch erreicht werden, dass die zumindest eine erste Wischlippe und/oder die zumindest eine zweite Wischlippe durch die selbsttätig aktive Wischlippenwechseleinheit aktiv relativ zueinander und zu zumindest einem Bauteil der Wischleisteneinheit bewegt werden oder durch eine Schwenkung zumindest eines Teil der Wischleisteneinheit. Vorzugsweise werden der erste Betriebszustand und der zweite Betriebszustand in unterschiedlichen Teilvorgängen des Wischvorgangs, insbesondere in unterschiedlichen Wischzügen in unterschiedlichen Wischrichtungen, eingesetzt. Vorzugsweise ist in dem ersten Betriebszustand die zumindest eine erste Wischlippe an einer der Wischrichtung des ersten Betriebszustands abgewandten Seite der Wischleisteneinheit und die zumindest eine zweite Wischlippe an einer der Wischrichtung des ersten Betriebszustands zugewandten Seite der Wischleisteneinheit angeordnet und in dem zweite Betriebszustand die zumindest eine zweite Wischlippe an einer der Wischrichtung des zweiten Betriebszustands abgewandten Seite der Wischleisteneinheit und die zumindest eine erste Wischlippe an einer der Wischrichtung des zweiten Betriebszustands zugewandten Seite der Wischleisteneinheit angeordnet, wobei die Wischrichtungen des ersten Betriebszustands und des zweiten Betriebszustands einander entgegen gerichtet sind. Es kann insbesondere ein einfach durchführbarer Wechsel der aktiven Wischlippe erreicht werden.

Des Weiteren wird vorgeschlagen, dass die selbsttätig aktive Wischlippenwechseleinheit dazu vorgesehen ist, die Wischleisteneinheit zum Wechsel zwischen dem ersten Betriebszustand und dem zweiten Betriebszustand zumindest teilweise zumindest im Wesentlichen reibungsfrei zu bewegen. Unter "zumindest im Wesentlichen reibungsfrei bewegen" soll insbesondere verstanden werden, dass eine Bewegung zu dem Wechsel der aktiven Wischlippe, insbesondere eine Bewegung zu dem Wechsel zwischen dem ersten Betriebszustand und dem zweiten Betriebszustand verschieden ist von einer Bewegung die durch eine Reibung der Scheibe mit Bauteilen der Wischleisteneinheit, die in einem Scheibenkontakt stehen, verursacht ist. Es kann insbesondere ein kontrollierbarer Wechsel der aktiven Wischlippe zu einem beliebig festlegbaren Zeitpunkt, insbesondere unabhängig von einem Bewegungszustand des Scheibenwischers, erreicht werden.

In einer Weiterbildung der Erfindung wird vorgeschlagen, dass die selbsttätig aktive Wischlippenwechseleinheit dazu vorgesehen ist, die zumindest eine erste Wischlippe und die zumindest eine zweite Wischlippe zu dem Wechsel zwischen dem ersten Betriebszustand und dem zweiten Betriebszustand relativ zu einer Kopfleiste der Wischleisteneinheit zu bewegen. Unter einer "Kopfleiste" der Wischleisteneinheit soll insbesondere eine Teileinheit der Wischleisteneinheit verstanden werden, die von der zumindest einen ersten Wischlippe und der zumindest einen zweiten Wischlippe abgewandt angeordnet ist und an der die Wischleisteneinheit mit weiteren Bauteilen eines Wischblatts verbunden ist. Es kann insbesondere ein genau einstellbarer und leicht durchzuführender Wechsel der aktiven Wischlippe erreicht werden.

Weiterhin wird vorgeschlagen, dass die selbsttätig aktive Wischlippenwechseleinheit dazu vorgesehen ist, die zumindest eine erste Wischlippe und die zumindest eine zweite Wischlippe relativ zu der Kopfleiste um einen Winkel zu schwenken. Darunter, dass "die zumindest eine erste Wischlippe und die zumindest eine zweite Wischlippe relativ zu der Kopfleiste geschwenkt werden" soll insbesondere verstanden werden, dass bei einem Wechsel der aktiven Wischlippe die Kopfleiste relativ zu weiteren Bauteilen des Wischblatts in einer festen Orientierung bleibt, und dass die die zumindest eine erste Wischlippe und die zumindest eine zweite Wischlippe relativ zu der Kopfleiste und den weiteren Bauteilen des Wischblatts um einen Winkel geschwenkt werden. Es kann insbesondere ein gezielter Wechsel der aktiven Wischlippe bei konventioneller Führung eines Wischblatts erreicht werden.

Ferner wird vorgeschlagen, dass die selbsttätig aktive Wischlippenwechseleinheit dazu vorgesehen ist, die zumindest eine erste Wischlippe und die zumindest eine zweite Wischlippe unabhängig voneinander zu bewegen. Unter "unabhängig voneinander bewegen" soll insbesondere verstanden werden, dass die zumindest eine erste Wischlippe bewegt werden kann und die zumindest eine zweite Wischlippe in einer bisherigen Orientierung verbleibt oder die zumindest eine zweite Wischlippe bewegt werden kann und die zumindest eine erste Wischlippe in einer bisherigen Orientierung verbleibt oder die zumindest eine erste Wischlippe und die zumindest eine zweite Wischlippe zu einem gleichen Zeitpunkt bewegt werden können. Es kann insbesondere eine hochflexible selbsttätig aktive Wischlippenwechseleinheit erreicht werden.

In einer Weiterbildung der Erfindung wird vorgeschlagen, dass die selbsttätig aktive Wischlippenwechseleinheit dazu vorgesehen ist, die Wischleisteneinheit im Ganzen um einen Winkel zu schwenken. Es kann insbesondere eine konstruktiv einfache selbsttätig aktive Wischlippenwechseleinheit erreicht werden.

Des Weiteren wird vorgeschlagen, dass die selbsttätig aktive Wischlippenwechseleinheit zumindest ein Piezoelement umfasst. Unter einem "Piezoelement" soll insbesondere ein Element verstanden werden, dass Steuersignale einer elektrischen Ansteuerung direkt in eine Bewegung umsetzt. Insbesondere ist das Piezoelement als ein Piezoaktor ausgebildet. Es kann insbesondere eine selbsttätig aktive Wischlippenwechseleinheit mit einem geringen Platzbedarf erreicht werden.

Ferner wird vorgeschlagen, dass die selbsttätig aktive Wischlippenwechseleinheit zumindest eine Hydraulikeinheit umfasst. Unter einer "Hydraulikeinheit" soll insbesondere eine Einheit verstanden werden, die zumindest eine Flüssigkeit, insbesondere Wasser, zu einer Übertragung von Kräften und einer Bewegung von Bauteilen nutzt. Es kann insbesondere eine konstruktiv einfache und robuste selbsttätig aktive Wischlippenwechseleinheit erreicht werden.

Weiterhin wird vorgeschlagen, dass die selbsttätig aktive Wischlippenwechseleinheit zumindest eine Pneumatikeinheit umfasst. Unter einer "Pneumatikeinheit" soll insbesondere eine Einheit verstanden werden, die mittels Luft eine Kraft überträgt und eine Bewegung eines Bauteils bewirkt. Es kann insbesondere eine konstruktiv einfache und robuste selbsttätig aktive Wischlippenwechseleinheit erreicht werden.

Des Weiteren wird vorgeschlagen, dass die selbsttätig aktive Wischlippenwechseleinheit zumindest eine Magneteinheit umfasst. Unter einer "Magneteinheit" soll insbesondere eine Einheit mit zumindest einem Magneten, vorzugsweise mit zumindest einem Elektromagneten, verstanden werden, die dazu vorgesehen ist, zumindest ein Bauteil magnetisch zu bewegen. Unter "magnetisch bewegen" soll insbesondere eine Bewegung eines Bauteils mittels einer auf das Bauteil ausgeübten Magnetkraft verstanden werden. Insbesondere ist die Magneteinheit dazu vorgesehen, zumindest die zumindest eine erste Wischlippe und/oder die zumindest eine zweite Wischlippe mittels der in die zumindest eine erste Wischlippe und/oder die zumindest eine zweite Wischlippe eingebrachte magnetische Elemente relativ zu einer Kopfleiste der Wischleisteneinheit magnetisch zu bewegen. Es kann insbesondere eine konstruktiv einfache und eine einfach ansteuerbare selbsttätig aktive Wischlippenwechseleinheit erreicht werden.

Ferner wird vorgeschlagen, dass die Magneteinheit dazu vorgesehen ist, die zumindest eine erste Wischlippe und/oder die zumindest eine zweite Wischlippe magnetisch zu bewegen. Es kann insbesondere eine konstruktiv einfache und mit einem geringen Aufwand und Energiebedarf wirkende selbsttätig aktive Wischlippenwechseleinheit erreicht werden.

Weiterhin wird vorgeschlagen, dass die zumindest eine erste Wischlippe zumindest ein Formgedächtniselement umfasst. Unter einem "Formgedächtniselement" soll insbesondere ein Element verstanden werden, das zumindest teilweise aus einem Formgedächtnismaterial, insbesondere einer Formgedächtnislegierung oder einem Formgedächtnispolymer hergestellt ist, das durch Anlegen eines Magnetfelds eine Auslenkung und Verformung erfährt und das nach Abschalten des Magnetfelds selbsttätig in eine Form vor der Auslenkung und Verformung zurückkehrt. Insbesondere ist das Formgedächtniselement in ein Elastomermaterial der zumindest einen ersten Wischlippe eingebettet und zu einer Versteifung der zumindest einen ersten Wischlippe vorgesehen. Insbesondere ist das Formgedächtniselement der zumindest einen erste Wischlippe dazu vorgesehen, von der Magneteinheit zu einem Wechsel der aktiven Wischlippe durch Anschalten des Magnetfelds mittels einer Magnetkraft ausgelenkt, vorzugsweise in Richtung einer Kopfleiste ausgelenkt, zu werden und nach Abschalten des Magnetfelds selbstständig in eine Ausgangsposition zurückzukehren. Es kann insbesondere eine auf einfache Weise zu bewegende erste Wischlippe erreicht werden.

Ferner wird vorgeschlagen, dass die zumindest eine zweite Wischlippe zumindest ein Formgedächtniselement umfasst. Es kann insbesondere eine auf einfache Weise zu bewegende zweite Wischlippe erreicht werden.

Ferner wird vorgeschlagen, dass die Wischvorrichtung eine Steuereinheit umfasst, die zu einer Ansteuerung der selbsttätig aktiven Wischlippenwechseleinheit vorgesehen ist. Insbesondere ist die Steuereinheit zu einer Ansteuerung der selbsttätig aktiven Wischlippenwechseleinheit in einem Wendevorgang vorgesehen. Unter einem "Wendevorgang" soll insbesondere ein Teilvorgang eines Wischvorgangs verstanden werden, in dem ein bewegtes Wischblatt abgebremst und in eine Richtung seiner Bewegung umgekehrt wird. Es kann insbesondere eine vorteilhaft ruhiger Wischzug erreicht werden.

Weiterhin wird vorgeschlagen, dass die selbsttätig aktive Wischlippenwechseleinheit zumindest eine aktive Hebeeinheit umfasst, die dazu vorgesehen ist, zumindest die Wischleisteneinheit in dem Wendevorgang anzuheben. Darunter, dass "zumindest die Wischleisteneinheit in dem Wendevorgang angehoben wird" soll insbesondere verstanden werden, dass in dem Wendevorgang ein Abstand zu einer Scheibe erhöht wird und hierzu zumindest die Wischleisteneinheit, vorzugsweise das Wischblatt im Ganzen, angehoben wird. Vorzugsweise wird während einer Hebung zumindest der Wischleisteneinheit die aktive Wischlippe gewechselt. Es kann insbesondere ein ruhiger Wechsel der aktiven Wischlippe und eine weitere Vermeidung eines Umlegegeräuschs bei einem Wechsel der aktiven Wischlippe erreicht werden.

Ferner wird vorgeschlagen, dass die zumindest eine erste Wischlippe und die zumindest eine zweite Wischlippe über eine konkave Fläche der Wischleisteneinheit verbunden sind. Unter "über eine konkave Fläche verbunden" soll insbesondere verstanden werden, dass die zumindest eine erste Wischlippe und die zumindest eine zweite Wischlippe über eine kantenfrei ausgebildete Fläche der Wischleisteneinheit, die einen konkaven Verlauf aufweist, miteinander verbunden sind. Insbesondere stehen die zumindest eine erste Wischlippe und die zumindest eine zweite Wischlippe in Wischrichtung betrachtet in einem Winkel von einem Grundkörper der Wischleisteneinheit, an dem die konkaven Fläche der Wischleisteneinheit angeordnet ist, ab, der zumindest um zehn Grad, vorteilhaft zumindest um zwanzig Grad, und vorzugsweise zumindest um dreißig Grad von neunzig Grad verschieden ist. Vorzugsweise spannen Endpunkte der zumindest einen ersten Wischlippe, der zumindest einen zweiten Wischlippe und ein Mittelpunkt der konkaven Fläche der Wischleisteneinheit ein gleichseitiges Dreieck auf. Es kann insbesondere eine Wischleisteneinheit mit einem vorteilhaft geringen benötigten Schwenkbereich zu einem Wechsel der aktiven Wischlippe erreicht werden.

Des Weiteren wird vorgeschlagen, dass die Wischvorrichtung zumindest eine Adaptereinheit zur Verbindung eines Wischblatts mit einem Wischarm umfasst, welche die selbsttätig aktive Wischlippenwechseleinheit aufweist. Insbesondere umfasst die Adaptereinheit einen Wischblattadapter und/oder einen Wischarmadapter. Vorzugsweise ist die in der Adaptereinheit angeordnete selbsttätig aktive Wischlippenwechseleinheit dazu vorgesehen, das Wischblatt und somit die Wischleisteneinheit im Ganzen um einen Winkel zu schwenken. Es kann insbesondere eine konstruktiv einfache selbsttätig aktive Wischlippenwechseleinheit erreicht werden.

Weiterhin wird vorgeschlagen, dass die Wischvorrichtung zumindest eine Lagereinheit zur Lagerung eines Wischarms umfasst, welche die selbsttätig aktive Wischlippenwechseleinheit aufweist. Unter einer "Lagereinheit zur Lagerung eines Wischarms" soll insbesondere eine Einheit in einem Teilbereich einer Fahrzeugkarosserie verstanden werden, die dazu vorgesehen ist, den Wischarm aufzunehmen und zu lagern. Vorzugsweise ist die selbsttätig aktive Wischlippenwechseleinheit der Lagereinheit dazu vorgesehen, den Wischarm und somit ein an dem Wischarm befestigtes Wischblatt im Ganzen um einen Winkel zu schwenken. Es kann insbesondere eine konstruktiv einfache selbsttätig aktive Wischlippenwechseleinheit erreicht werden.

Ferner wird vorgeschlagen, dass eine Orientierung der zumindest einen ersten Wischlippe zu der zumindest einen zweiten Wischlippe im unbelasteten Zustand zueinander fest ist. Unter einem "unbelasteten Zustand" soll insbesondere ein Zustand verstanden werden, in dem die Wischleisteneinheit frei von einer Anpressung an eine Scheibe ist. Darunter, dass "eine Orientierung der zumindest einen ersten Wischlippe zu der zumindest einen zweiten Wischlippe im unbelasteten Zustand zueinander fest ist" soll insbesondere verstanden werden, dass in dem unbelasteten Zustand die zumindest eine erste Wischlippe und die zumindest eine zweite Wischlippe bis auf eine Materialnachgiebigkeit frei von einer relativen Verschiebbarkeit gegeneinander sind und zu einem Wechsel der aktiven Wischlippe, der während des unbelasteten Zustands stattfindet, die Wischleisteneinheit im Ganzen bewegt und vorzugsweise geschwenkt wird. Es kann insbesondere eine Wischleisteneinheit mit hoher Stabilität erreicht werden.

Die erfindungsgemäße Wischvorrichtung soll hierbei nicht auf die oben beschriebene Anwendung und Ausführungsform beschränkt sein. Insbesondere kann die erfindungsgemäße Wischvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In den Zeichnungen sind sieben Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Wischvorrichtung mit einer ersten Wischlippe und einer zweiten Wischlippe in einem ersten Betriebszustand, in dem die erste Wischlippe als aktive Wischlippe wirksam ist,
- Fig. 2: die erfindungsgemäße Wischvorrichtung in einem durch die selbsttätig aktive Wischlippenwechseleinheit bewirkten Übergang zwischen dem ersten und einem zweiten Betriebszustand, in dem die zweite Wischlippe als aktive Wischlippe wirksam ist,
- Fig. 3: die erfindungsgemäße Wischvorrichtung in dem zweiten Betriebszustand,
- Fig. 4: eine Detailansicht der selbsttätig aktiven Wischlippenwechseleinheit,
- Fig. 5: eine alternative Wischvorrichtung, in dem die selbsttätig aktive Wischlippenwechseleinheit eine Magneteinheit umfasst, die magnetische Elemente in einer ersten Wischlippe und einer zweiten Wischlippe zu einem Wechsel der aktiven Wischlippe bewegt,
- Fig. 6: eine weitere alternative Wischvorrichtung mit einer eine Magneteinheit umfassenden selbsttätig aktiven Wischlippenwechseleinheit, wobei magnetische Elemente in einer ersten Wischlippe und einer zweiten Wischlippe als Formgedächtniselemente ausgebildet sind,
- Fig. 7: eine alternative Wischvorrichtung mit einer eine Hydraulikeinheit oder eine Pneumatikeinheit umfassenden selbsttätig aktiven Wischlippenwechseleinheit,
- Fig. 8: eine alternative Wischvorrichtung mit einer in einer Adaptereinheit angeordneten selbsttätig aktiven Wischlippenwechseleinheit,
- Fig. 9: eine alternative Wischvorrichtung mit einer in einer Lagereinheit zur Lagerung eines Wischarms angeordneten selbsttätig aktiven Wischlippenwechseleinheit und
- Fig. 10: ein Funktionsdiagramm einer erfindungsgemäßen Wischvorrichtung mit einer Steuereinheit.

### Beschreibung der Ausführungsbeispiele

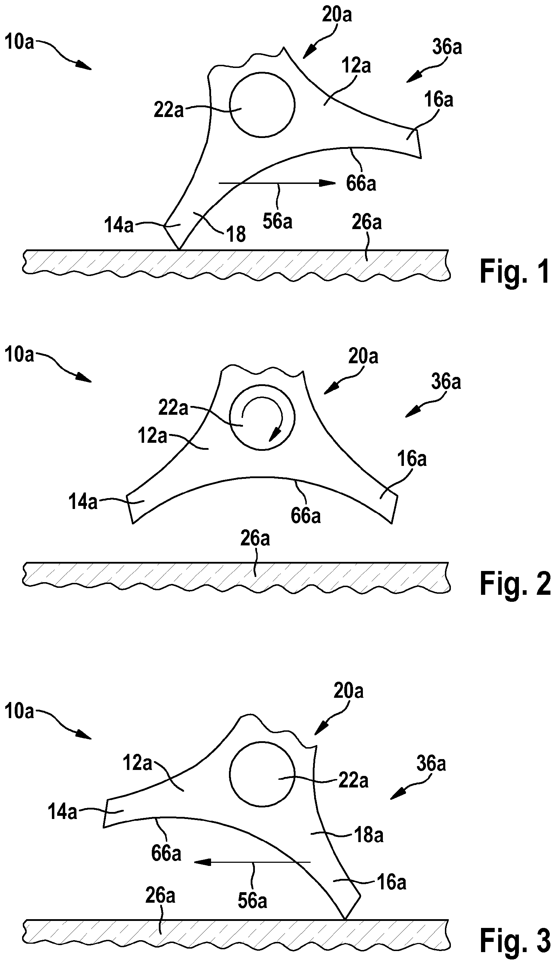

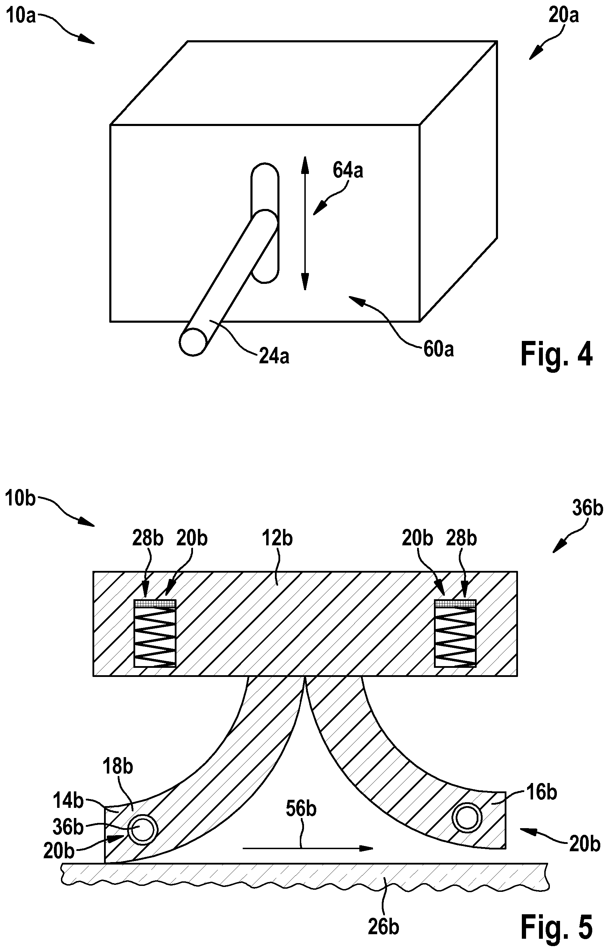

Fig. 1 zeigt eine Wischvorrichtung 10a zur Reinigung einer Scheibe 26a mit einer Wischleisteneinheit 12a, die eine erste Wischlippe 14a und eine zweite Wischlippe 16a aufweist. Die Wischleisteneinheit 12a ist aus einem Gummimaterial hergestellt und ist einstückig mit der ersten Wischlippe 14a und der zweiten Wischlippe 16a in einem Extrusionsprozess hergestellt worden. Die erste Wischlippe 14a und die zweite Wischlippe 16a weisen einen Kontaktbereich zu einer Scheibe 26a für eine Reinigung der Scheibe 26a von Flüssigkeiten auf. Die Wischvorrichtung 10a weist eine selbsttätig aktive Wischlippenwechseleinheit 20a auf, die dazu vorgesehen ist, eine in zumindest einem Teilvorgang eines Wischvorgangs aktive Wischlippe 18a zu wechseln. Ein Wischvorgang setzt sich zusammen aus einem Wischzug in eine Wischrichtung 56a (Fig. 1), einen Wendevorgang (Fig. 2), in dem eine Bewegung der Wischleisteneinheit 12a umgekehrt wird und einem Wischzug in eine entgegengesetzte Wischrichtung 58a (Fig. 3). Eine aktive Wischlippe 18a bezeichnet eine erste Wischlippe 14a oder eine zweite Wischlippe 16a, die in einem Wischzug einen Großteil von Flüssigkeiten von der Scheibe 26a entfernt, wobei unter einem Großteil von Flüssigkeiten ein Anteil von zumindest neunzig Prozent eines Volumens von in einem Teilvorgang einer Scheibenreinigung, entfernten Flüssigkeiten verstanden werden. Zu einem Wechsel der aktiven Wischlippe 18a bewegt die selbsttätig aktive Wischlippenwechseleinheit 20a die Wischleisteneinheit 12a in dem Wendevorgang. Die Wischleisteneinheit 12a weist eine Achsenaufnahme 22a auf, die zu einer Aufnahme einer durch die aktive Wischlippenwechseleinheit 20a bewegbaren und rotierbaren Achse 24a (Fig. 4) vorgesehen ist. Die Achse 24a ist mit der Wischleisteneinheit 12a über einen Reibschluss rotatorisch gekoppelt, grundsätzlich können jedoch auch Mitnahmeelemente wie beispielsweise vorstehende Ausformungen der Achse 24a zu einem Eingriff in korrespondierende Ausnehmungen der Wischleisteneinheit 12a an der Achsenaufnahme 22a vorgesehen sein, um die Wischleisteneinheit 12a rotatorisch an die Achse 24a zu koppeln. Die selbsttätig aktive Wischlippenwechseleinheit 20a bewegt über die Achse 24a und die Achsenaufnahme 22a die Wischleisteneinheit 12a aktiv, d.h. mit einer von einer Wischbewegung verschiedenen Bewegung.

Die selbsttätig aktive Wischlippenwechseleinheit 20a ist dazu vorgesehen, zwischen einem ersten Betriebszustand, in dem die erste Wischlippe 14a als aktive Wischlippe 18a wirksam ist und die zumindest eine zweite Wischlippe 16a kontaktfrei zu der Scheibe 26a angeordnet ist (Fig. 1), und einem zweiten Betriebszustand, in dem die zumindest eine zweite Wischlippe 16a als aktive Wischlippe 18a wirksam ist und die zumindest eine erste Wischlippe 14a kontaktfrei zu der Scheibe 26a angeordnet ist, zu wechseln. Der erste Betriebszustand ist in Fig. 1 dargestellt, der zweite Betriebszustand in Fig. 3. Der erste Betriebszustand und der zweite Betriebszustand entsprechen im Wesentlichen den Wischzügen des Wischvorgangs. In dem ersten Betriebszustand und dem zweiten Betriebszustand ist jeweils die in Wischrichtung 56a bzw. 58a betrachtet hintere Wischlippe 14a, 16a als aktive Wischlippe 18a wirksam. Die selbsttätig aktive Wischlippenwechseleinheit 20a ist dazu vorgesehen, die Wischleisteneinheit 12a zum Wechsel zwischen dem ersten und dem zweiten Betriebszustand im Wesentlichen reibungsfrei zu bewegen, wobei mit einer im Wesentlichen reibungsfreien Bewegung eine Bewegung bezeichnet wird, die verschieden ist von einer Bewegung, die durch eine Reibung der Scheibe 26a mit Bauteilen der Wischleisteneinheit 12a, die in einem Scheibenkontakt stehen, verursacht ist. Eine Reibungsfreiheit der Bewegung wird ferner dadurch unterstützt, dass die Wischleisteneinheit 12a in dem Wendevorgang angehoben wird und somit die erste Wischlippe 14a und die zweite Wischlippe 16a in dem Wendevorgang kontaktfrei zu der Scheibe 26a angeordnet sind. Die selbsttätig aktive Wischlippenwechseleinheit 20a schwenkt zu einem Wechsel der aktiven Wischlippe 18a die Wischleisteneinheit 12a im Ganzen um einen Winkel, wobei ein Schwenkvorgang während dem Wendevorgang durchgeführt wird. Durch einen Wechsel der aktiven Wischlippe 18a durch die selbsttätig aktive Wischlippenwechseleinheit 20a und eine Wechselbewegung, die ohne Reibung mit der Scheibe 26a stattfindet, entfällt ein störendes Umklappgeräusch bei einem Wechsel der Wischrichtung 56a, 58a und es kann ein besonders ruhiger Wischvorgang erreicht werden. Ferner wird ein Verspritzen von Flüssigkeit auf gereinigte Flächen bei einem Umklappen der Wischlippen 14a, 16a der Wischleisteneinheit 12a vermieden.

Die erste Wischlippe 14a und die zweite Wischlippe 16a der Wischleisteneinheit 12a sind über eine konkave Fläche 66a der Wischleisteneinheit 12a verbunden und stehen in Wischrichtung 56a, 58a betrachtet in einem Winkel von einem Grundkörper der Wischleisteneinheit 12a, an dem die konkaven Fläche 66a der Wischleisteneinheit 12a angeordnet ist, ab, der etwa dreißig Grad beträgt. Durch die erfindungsgemäße Ausgestaltung hat die Wischleisteneinheit 12a in einem Bereich der konkaven Fläche 66a, der ersten Wischlippe 14a und der zweiten Wischlippe 16a eine Form, die einer Form eines Ausschnitts mit zwei benachbarten Zacken einer Sternform ähnelt, wobei Ecken der Sternform abgerundet wurden.

Fig. 4 zeigt eine Detailansicht der selbsttätig aktiven Wischlippenwechseleinheit 20a der Wischvorrichtung 10a, die in eine Endkappe integriert ist, welche ein in Fig. 1 - 3 ausschnittsweise dargestelltes Wischblatt 36a der Wischvorrichtung 10a mit der Wischleisteneinheit 12a seitlich abschließt. Die selbsttätig aktive Wischlippenwechseleinheit 20a umfasst ein Piezoelement 60a, das dazu vorgesehen ist, die Achse 24a in Rotation zu versetzen. Die selbsttätig aktive Wischlippenwechseleinheit 20a umfasst ferner eine aKtive Hebeeineil 64a, die dazu vorgesenen ist, die Wischleisteneinheit 12a in einem Wendevorgang anzuheben (Fig. 2). Hierzu umfasst die aktive Hebeeinheit 64a einen Aktor, der die Achse 24a in einer Höhe verschieben Kann, und die Achse 24a ist als Lagerachse der Wischleisteneinheit 12a ausgebildet, an der diese gelagert wird. In einer alternativen Ausgestaltung kann die aktive Hebeeinheit auch in einen nicht dargestellten Wischarm integriert sein und eine Abhebung des gesamten Wischarms bewirken, so dass die Wischleisteneinheit 12a im Ganzen angehoben wird. In dieser Ausgestaltung wird die Wischleisteneinheit 12a mittels der Achse 24a lediglich im Ganzen um einen Winkel geschwenkt.

In den Figuren 5 bis 10 sind sechs weitere Ausführungsbeispiele gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 4 verwiesen wird. Zur Unterscheidung der Ausführungsbeispiele ist der Buchstabe a den Bezugszeichen des Ausführungsbeispiels in den Figuren 1 bis 4 nachgestellt. In den Ausführungsbeispielen der Figuren 5 bis 10 ist der Buchstabe a durch die Buchstaben b bis g ersetzt.

Fig. 5 zeigt eine alternative Wischvorrichtung 10b mit einer Wischleisteneinheit 12b, die eine erste Wischlippe 14b und eine zweite Wischlippe 16b aufweist, und mit einer selbsttätig aktiven Wischlippenwechseleinheit 20b, die dazu vorgesehen ist, eine in zumindest einem Teilvorgang eines Wischvorgangs aktive Wischlippe 18b zu wechseln. Die selbsttätig aktive Wischlippenwechseleinheit 20b umfasst eine Magneteinheit 28b. Die Magneteinheit 28b weist zwei in eine Kopfleiste der Wischleisteneinheit 12b eingearbeitete Elektromagnete auf und ist dazu vorgesehen, die erste Wischlippe 14b und die zweite Wischlippe 16b magnetisch zu bewegen. In die erste Wischlippe 14b und die zweite Wischlippe 16b sind hierzu magnetische Elemente 30b eingearbeitet, auf die mittels der Magneteinheit 28b eine Kraft ausgeübt wird, so dass durch die Kraft auf die magnetische Elemente 30b die erste Wischlippe 14b und/oder die zweite Wischlippe 16b in Richtung auf die Kopfleiste gezogen und somit von der Scheibe 26b abgehoben werden. Jeweils ein Elektromagnet der Magneteinheit 28b ist hierzu jeweils der ersten Wischlippe 14b und der zweiten Wischlippe 16b gegenüberliegend angeordnet, wobei eine Magnetkraft auf ein magnetisches Element 30c in einer entfernt liegenden Wischlippe 14b, 16b aufgrund eines Abstands vernachlässigbar ist.

In Fig. 5 ist ein erster Betriebszustand dargestellt, in dem die erste Wischlippe 14b als aktive Wischlippe 18b wirksam ist und die zweite Wischlippe 16b kontaktfrei zu einer Scheibe 26b gelagert ist. Die selbsttätig aktive Wischlippenwechseleinheit 20b ist dazu vorgesehen, die erste Wischlippe 14b und die zweite Wischlippe 16b zu dem Wechsel zwischen dem ersten Betriebszustand und einem zweiten Betriebszustand, in dem die zweite Wischlippe 16b als aktive Wischlippe 18b wirksam ist und die erste Wischlippe 16b kontaktfrei zu der Scheibe 26b gelagert ist, relativ zu einer Kopfleiste der Wischleisteneinheit 12b zu bewegen. Eine Bewegung relativ zu der Kopfleiste der Wischleisteneinheit 12b wird dabei durch ein Abheben von bzw. ein Absenken zu der Scheibe 26b erreicht. Eine unabgehobene Wischlippe 14b, 16b ist als aktive Wischlippe 18b wirksam. Durch einen Wechsel eines Stromdurchflusses zwischen den Elektromagneten der Magneteinheit 28b wird somit ein Wechsel der aktiven Wischlippe 18b erreicht. Die selbsttätig aktive Wischlippenwechseleinheit 20b ist dazu vorgesehen, die erste Wischlippe 14b und die zweite Wischlippe 16b unabhängig voneinander zu bewegen. Hierzu können die beiden Elektromagneten der Magneteinheit 28b separat angeschaltet werden, so dass sie jeweils eine der Wischlippen 14b, 16b von der Scheibe 26b abheben. Die magnetischen Elemente 30b sind in einem Bereich nahe von Spitzen der ersten Wischlippe 14b bzw. der zweiten Wischlippe 16b angeordnet, so dass durch die selbsttätig aktive Wischlippenwechseleinheit 20b die erste Wischlippe 14b und die zweite Wischlippe 16b bei einem Wechsel der aktiven Wischlippe 18b relativ zu der Kopfleiste um einen Winkel geschwenkt werden.

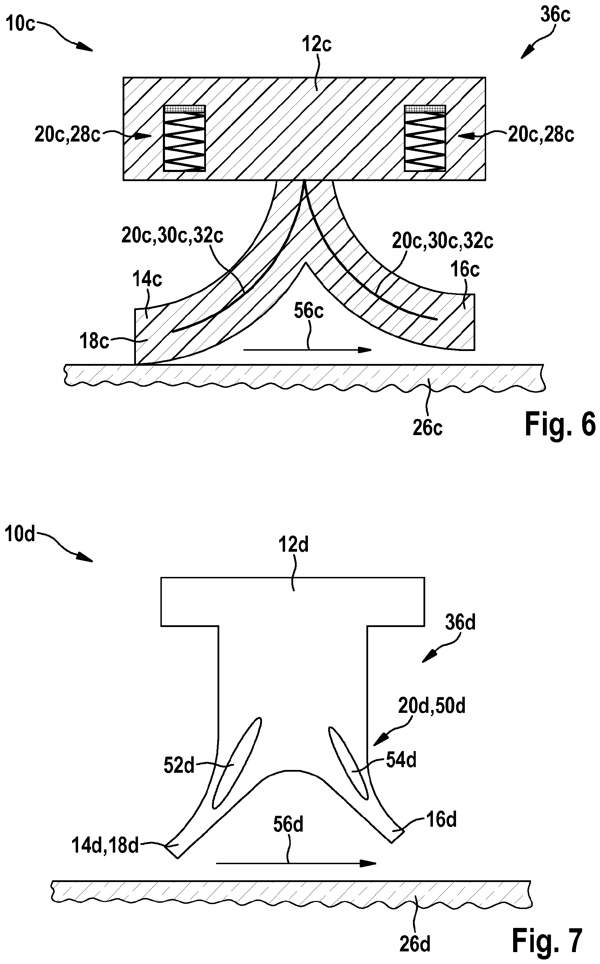

Fig. 6 zeigt eine weitere alternative Wischvorrichtung 10c mit einer Wischleisteneinheit 12c, die eine erste Wischlippe 14c und eine zweite Wischlippe 16c aufweist, und mit einer selbsttätig aktiven Wischlippenwechseleinheit 20c die dazu vorgesehen ist, eine in zumindest einem Teilvorgang eines Wischvorgangs aktive Wischlippe 18c zu wechseln. Die Wischlippenwechseleinheit 20c umfasst eine Magneteinheit 28c. Die erste Wischlippe 14c umfasst ein Formgedächtniselement 32c, die zweite Wischlippe 16c ein Formgedächtniselement 34c. Die Formgedächtniselemente 32c, 34c sind als magnetische Elemente 30c ausgebildet, auf die eine Magnetkraft der Magneteinheit 28b zu einem Wechsel der aktiven Wischlippe 18c ausgeübt wird, und bestehen teilweise aus einer magnetischen Formgedächtnislegierung, die durch Anlegen eines Magnetfelds durch die Magneteinheit 28c ihre Form ändert, wodurch eine Abhebung der ersten Wischlippe 14c und/oder der zweiten Wischlippe 16c von einer Scheibe 26c erreicht wird. Bei einer Abschaltung des Magnetfelds kehren die Formgedächtniselemente 32c, 34c in eine vor Anlegen des Magnetfelds bestehende Form zurück.

Fig. 7 zeigt eine weitere alternative Wischvorrichtung 10d mit einer Wischleisteneinheit 12d, die eine erste Wischlippe 14d und eine zweite Wischlippe 16d aufweist, und mit einer selbsttätig aktiven Wischlippenwechseleinheit 20d, die dazu vorgesehen ist, eine in zumindest einem Teilvorgang eines Wischvorgangs aktive Wischlippe 18d zu wechseln. Die selbsttätig aktive Wischlippenwechseleinheit 20d umfasst eine Hydraulikeinheit 50d. An einem Übergang zwischen einem Grundkörper der Wischleisteneinheit 12d und der ersten Wischlippe 14d ist ein Hohlraum 52d in der Wischleisteneinheit 12d ausgebildet, während an einem Übergang zwischen dem Grundkörper und der zweiten Wischlippe 16d ein weiterer Hohlraum 54d in der Wischleisteneinheit 12d ausgebildet ist. Die Hydraulikeinheit 50d pumpt zu einem Wechsel der aktiven Wischlippe 18d eine Flüssigkeit von einem der Hohlräume 52d, 54d in den jeweils anderen um, wobei die Hohlräume 52d, 54d derart beschaffen sind, dass sich bei einer Füllung des Hohlraums 52d, 54d ein Volumen des Hohlraums 52d, 54d erweitert und dadurch die erste Wischlippe 14d bzw. die zweite Wischlippe 16d in eine Richtung auf eine Scheibe 26d zu bewegt wird. Eine der Scheibe 26d am nächsten gelegene Wischlippe 14d, 16d wird dann als aktive Wischlippe 18d wirksam. Durch ein Umpumpen der Flüssigkeit wird somit ein Wechsel der aktiven Wischlippe 18d erreicht.

In einer weiteren alternativen Ausgestaltung kann die selbsttätig aktive Wischlippenwechseleinheit 20a anstatt einer Hydraulikeinheit 50d eine Pneumatikeinheit umfassen, die anstelle einer Flüssigkeit eine Luftmenge zu einem Wechsel der aktiven Wischlippe 18d umpumpt.

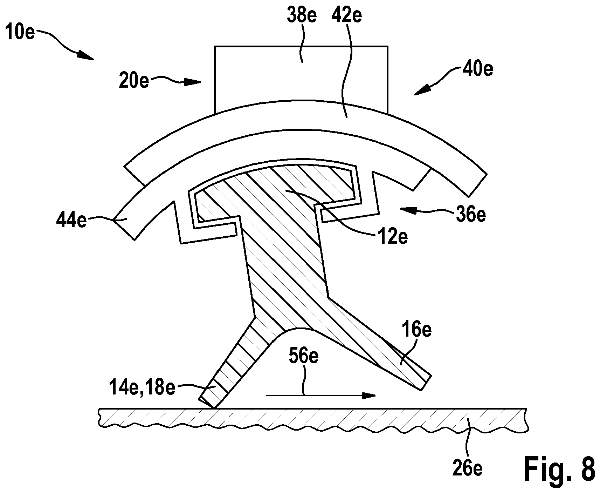

In Fig. 8 ist eine weitere alternative Wischvorrichtung 10e mit einer Wischleisteneinheit 12e, die eine erste Wischlippe 14e und eine zweite Wischlippe 16e aufweist, und mit einer selbsttätig aktiven Wischlippenwechseleinheit 20e, die dazu vorgesehen ist, eine in zumindest einem Teilvorgang eines Wischvorgangs aktive Wischlippe 18e zu wechseln. Die Wischvorrichtung 10e umfasst eine Adaptereinheit 40e zur Verbindung eines Wischblatts 36e mit einem Wischarm 38e, welche die selbsttätig aktive Wischlippenwechseleinheit 20e aufweist. Die Adaptereinheit 40e umfasst einen an dem Wischblatt 36e befestigten Wischblattadapter 44e und einen an dem Wischarm 38e befestigten Wischarmadapter 42e, wobei der Wischarmadapter 42e den Wischblattadapter 44e zur Hälfte umschliesst. Der Wischblattadapter 44e kann relativ zu dem Wischarmadapter 42e durch die selbsttätig aktive Wischlippenwechseleinheit 20e zwischen unterschiedlichen Positionen bewegt werden, wodurch ein Winkel zwischen der Wischleisteneinheit 12e und einer Scheibe 26e variiert werden kann. Durch die Bewegung wird ein Wechsel der aktiven Wischlippe 18e erreicht, indem der Winkel zwischen der Wischleisteneinheit 12e und einer Scheibe 26e derart geändert wird, dass die erste Wischlippe 14e bzw. die zweite Wischlippe 16e von der Scheibe 26e abgehoben wird und die zweite Wischlippe 16e bzw. die erste Wischlippe 14e mit der Scheibe 26e in Kontakt gebracht wird.

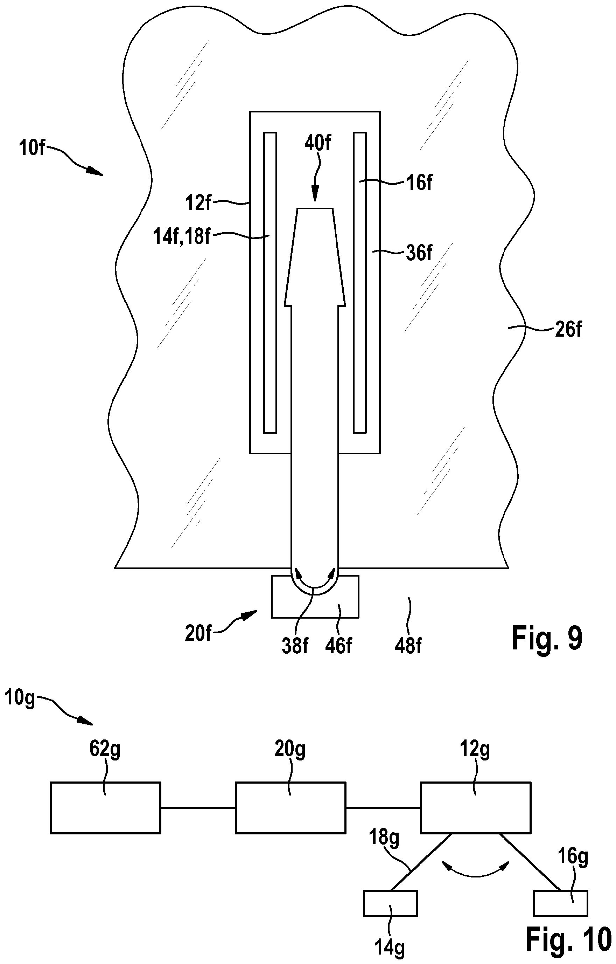

In einem weiteren alternativen Ausführungsbeispiel der Erfindung (Fig. 9) umfasst eine Wischvorrichtung 10f eine Wischleisteneinheit 12f, die eine erste Wischlippe 14f und eine zweite Wischlippe 16f aufweist, und eine selbsttätig aktiven Wischlippenwechseleinheit 20f, die dazu vorgesehen ist, eine in zumindest einem Teilvorgang eines Wischvorgangs aktive Wischlippe 18f zu wechseln, und eine Lagereinheit 46f zur Lagerung eines Wischarms 38f, welche die selbsttätig aktive Wischlippenwechseleinheit 20f aufweist. Die Lagereinheit 46f ist in einem Karosseriebereich 48f eines Kraftfahrzeugs nahe einer Scheibe 26f des Kraftfahrzeugs angebracht. Die Lagereinheit 46f lagert den Wischarm 38f rotierbar um eine körpereigene Wischarmachse, wobei durch eine Rotation des Wischarms 38f mittels der selbsttätig aktiven Wischlippenwechseleinheit 20f auch ein an dem Wischarm 38f über eine Adaptereinheit 40f befestigtes Wischblatt 36f rotiert wird. Insbesondere wird dadurch auch die Wischleisteneinheit 12f rotiert und ein Winkel zwischen der Wischleisteneinheit 12f und der Scheibe 26f geändert, wodurch eine aktive Wischlippe 18f gewechselt wird.

In einer schematischen Darstellung (Fig. 10) einer weiteren alternativen Ausbildung einer Wischvorrichtung 10g umfasst die Wischvorrichtung 10g eine Steuereinheit 62g, die zu einer Ansteuerung einer selbsttätig aktiven Wischlippenwechseleinheit 20g vorgesehen ist. Durch die Ansteuerung wird ein Wechsel einer aktiven Wischlippe 18g zwischen einer ersten Wischlippe 14g und einer zweiten Wischlippe 16g einer Wischleisteneinheit 12g bewirkt. Die Steuereinheit 62g kann in eine Elektronikeinheit eines Fahrzeugs integriert oder separat ausgebildet sein und zur Ansteuerung eines Wischlippenwechsels bei sämtlichen vorher beschriebenen Ausführungsbeispielen verwendet werden.

## Patentansprüche

1. Wischvorrichtung mit zumindest einer Wischleisteneinheit (12b - d), die zumindest eine erste Wischlippe (14b - d), zumindest eine zweite Wischlippe (16b - d) und zumindest eine selbsttätig aktive Wischlippenwechseleinheit (20b - d) aufweist, die dazu vorgesehen ist, eine in zumindest einem Teilvorgang eines Wischvorgangs aktive Wischlippe (18b - d) zu wechseln, wobei die selbsttätig aktive Wischlippenwechseleinheit (20b - d) dazu vorgesehen ist, zwischen einem ersten Betriebszustand, in dem die zumindest eine erste Wischlippe (14b - d) als aktive Wischlippe (18b - d) wirksam ist und die zumindest eine zweite Wischlippe (16b - d) kontaktfrei zu einer Scheibe (26b - d) angeordnet ist, und einem zweiten Betriebszustand, in dem die zumindest eine zweite Wischlippe (16b-d) als aktive Wischlippe (18b-d) wirksam ist und die zumindest eine erste Wischlippe (14b-d) kontaktfrei zu der Scheibe (26b - d) angeordnet ist, zu wechseln, wobei die Wischleisteneinheit (12b-d) einstückig mit der ersten Wischlippe (14b-d) und der zweiten Wischlippe (16b-d) in einem Extrusionsprozess aus einem Gummimaterial hergestellt ist, **dadurch gekennzeichnet, dass** die selbsttätig aktive Wischlippenwechseleinheit (20b - d) dazu vorgesehen ist, die zumindest eine erste Wischlippe (14b - d) und die zumindest eine zweite Wischlippe (16b - d) zu dem Wechsel zwischen dem ersten Betriebszustand und dem zweiten Betriebszustand relativ zu einer Kopfleiste der Wischleisteneinheit (12b - d) zu bewegen.

2. Wischvorrichtung nach Anspruch 1, **dadurch gekennzeichnet, dass** die selbsttätig aktive Wischlippenwechseleinheit (20b - d) dazu vorgesehen ist, die Wischleisteneinheit (12b - d) in einem Wendevorgang zumindest teilweise zu bewegen.

3. Wischvorrichtung nach Anspruch 1 oder 2, **dadurch gekennzeichnet, dass** die selbsttätig aktive Wischlippenwechseleinheit (20b - d) dazu vorgesehen ist, die Wischleisteneinheit (12b - d) zum Wechsel zwischen dem ersten und dem zweiten Betriebszustand zumindest teilweise zumindest im Wesentlichen reibungsfrei zu bewegen.

4. Wischvorrichtung nach einem der vorhergehenden Ansprüche, **dadurch gekennzeichnet, dass** die selbsttätig aktive Wischlippenwechseleinheit (20b - d) dazu vorgesehen ist, die zumindest eine erste Wischlippe (14b - d) und die zumindest eine zweite Wischlippe (16b - d) relativ zu der Kopfleiste um einen Winkel zu schwenken.

5. Wischvorrichtung nach einem der vorhergehenden Ansprüche, **dadurch gekennzeichnet, dass** die selbsttätig aktive Wischlippenwechseleinheit dazu vorgesehen ist, die zumindest eine erste Wischlippe (14b - d) und die zumindest eine zweite Wischlippe (16b - d) unabhängig voneinander zu bewegen.

6. Wischvorrichtung nach einem der vorhergehenden Ansprüche, **dadurch gekennzeichnet, dass** die selbsttätig aktive Wischlippenwechseleinheit (20d) zumindest eine Hydraulikeinheit (50d) umfasst.

7. Wischvorrichtung nach einem der vorhergehenden Ansprüche, **dadurch gekennzeichnet, dass** die selbsttätig aktive Wischlippenwechseleinheit (20d) zumindest eine Pneumatikeinheit umfasst.

8. Wischvorrichtung nach einem der vorhergehenden Ansprüche, **dadurch gekennzeichnet, dass** die selbsttätig aktive Wischlippenwechseleinheit (20b - c) zumindest eine Magneteinheit (28b - c) umfasst.

9. Wischvorrichtung nach Anspruch 8, **dadurch gekennzeichnet, dass** die Magneteinheit (28b - c) dazu vorgesehen ist, die zumindest eine erste Wischlippe (14a - g) und/oder die zumindest eine zweite Wischlippe (16a - g) magnetisch zu bewegen.

10. Wischvorrichtung nach Anspruch 9, **dadurch gekennzeichnet, dass** die zumindest eine erste Wischlippe (14c) zumindest ein Formgedächtniselement (32c) umfasst.

11. Wischvorrichtung nach Anspruch 9 oder 10, **dadurch gekennzeichnet, dass** die zumindest eine zweite Wischlippe (16c) zumindest ein Formgedächtniselement (34c) umfasst.

## Claims

1. Wiper device comprising at least one wiper strip unit (12b-d) which has at least one first wiper lip (14b-d), at least one second wiper lip (16b-d), and at least one automatically active wiper lip switching unit (20b-d) which is provided to switch a wiper lip (18b-d) which is active in at least one sub-process of a wiping process, wherein the automatically active wiper lip switching unit (20b-d) is provided to switch between a first operating state, in which the at least one first wiper lip (14b-d) functions as the active wiper lip (18b-d) and the at least one second wiper lip (16b-d) is arranged such that it is free from contact with a windscreen (26b-d), and a second operating state, in which the at least one second wiper lip (16b-d) functions as the active wiper lip (18b-d) and the at least one first wiper lip (14b-d) is arranged such that it is free from contact with the windscreen (26b-d), wherein the wiper strip unit (12b-d) is produced from a rubber material in one piece with the first wiper lip (14b-d) and the second wiper lip (16b-d) in an extrusion process, **characterized in that** the automatically active wiper lip switching unit ((20b-d) is provided to move the at least one first wiper lip (14b-d) and the at least one second wiper lip (16b-d) for the purpose of switching between the first operating state and the second operating state relative to a top strip of the wiper strip unit (12b-d).

2. Wiper device according to Claim 1, **characterized in that** the automatically active wiper lip switching unit (20b-d) is provided to at least partially move the wiper strip unit (12b-d) in a turning process.

3. Wiper device according to Claim 1 or 2, **characterized in that** the automatically active wiper lip switching unit (20b-d) is provided to move the wiper strip unit (12b-d) at least partially and at least substantially free from friction for the purpose of switching between the first operating state and the second operating state.

4. Wiper device according to one of the preceding claims, **characterized in that** the automatically active wiper lip switching unit (20b-d) is provided to pivot the at least one first wiper lip (14b-d) and the at least one second wiper lip (16b-d) relative to the top strip by an angle.

5. Wiper device according to one of the preceding claims, **characterized in that** the automatically active wiper lip switching unit is provided to move the at least one first wiper lip (14b-d) and the at least one second wiper lip (16b-d) independently of one another.

6. Wiper device according to one of the preceding claims, **characterized in that** the automatically active wiper lip switching unit (20d) comprises at least one hydraulic unit (50d).

7. Wiper device according to one of the preceding claims, **characterized in that** the automatically active wiper lip switching unit (20d) comprises at least one pneumatic unit.

8. Wiper device according to one of the preceding claims, **characterized in that** the automatically active wiper lip switching unit (20b-c) comprises at least one magnet unit (28b-c).

9. Wiper device according to Claim 8, **characterized in that** the magnet unit (28b-c) is provided to magnetically move the at least one first wiper lip (14a-g) and/or the at least one second wiper lip (16a-g) .

10. Wiper device according to Claim 9, **characterized in that** the at least one first wiper lip (14c) comprises at least one shape memory element (32c).

11. Wiper device according to Claim 9 or 10, **characterized in that** the at least one second wiper lip (16c) comprises at least one shape memory element (34c).

## Revendications

1. Dispositif d'essuyage, comprenant au moins une unité de baguette d'essuyage (12b-d) qui présente au moins une première lèvre d'essuyage (14b-d), au moins une deuxième lèvre d'essuyage (16b-d) et au moins une unité de remplacement de lèvre d'essuyage (20b-d) à activité automatique qui est prévue pour remplacer une lèvre d'essuyage (18b-d) active dans au moins une opération partielle d'une opération d'essuyage, dans lequel l'unité de remplacement de lèvre d'essuyage (20b-d) à activité automatique est prévue pour changer entre un premier état de fonctionnement, dans lequel ladite au moins une première lèvre d'essuyage (14b-d) agit comme une lèvre d'essuyage (18b-d) active et ladite au moins une deuxième lèvre d'essuyage (16b-d) est disposée sans contact avec une vitre (26b-d), et un deuxième état de fonctionnement, dans lequel ladite au moins une deuxième lèvre d'essuyage (16b-d) agit comme une lèvre d'essuyage (18b-d) active et ladite au moins une première lèvre d'essuyage (14b-d) est disposée sans contact avec la vitre (26b-d), dans lequel l'unité de baguette d'essuyage (12b-d) est fabriquée d'une seule pièce avec la première lèvre d'essuyage (14b-d) et la deuxième lèvre d'essuyage (16b-d) dans un processus d'extrusion à partir d'un matériau caoutchouteux, **caractérisé en ce que** l'unité de remplacement de lèvre d'essuyage (20b-d) à activité automatique est prévue pour déplacer ladite au moins une première lèvre d'essuyage (14b-d) et ladite au moins une deuxième lèvre d'essuyage (16b-d) par rapport à une baguette de tête de l'unité de baguette d'essuyage (12b-d), en vue d'un changement entre le premier état de fonctionnement et le deuxième état de fonctionnement.

2. Dispositif d'essuyage selon la revendication 1, **caractérisé en ce que** l'unité de remplacement de lèvre d'essuyage (20b-d) à activité automatique est prévue pour déplacer au moins en partie l'unité de baguette d'essuyage (12b-d) dans une opération d'inversion.

3. Dispositif d'essuyage selon la revendication 1 ou 2, **caractérisé en ce que** l'unité de remplacement de lèvre d'essuyage (20b-d) à activité automatique est prévue pour déplacer l'unité de baguette d'essuyage (12b-d) au moins en partie au moins substantiellement sans friction, en vue d'un changement entre le premier et le deuxième état de fonctionnement.

4. Dispositif d'essuyage selon l'une quelconque des revendications précédentes, **caractérisé en ce que** l'unité de remplacement de lèvre d'essuyage (20b-d) à activité automatique est prévue pour faire pivoter ladite au moins une première lèvre d'essuyage (14b-d) et ladite au moins une deuxième lèvre d'essuyage (16bd) d'un angle par rapport à la baguette de tête.

5. Dispositif d'essuyage selon l'une quelconque des revendications précédentes, **caractérisé en ce que** l'unité de remplacement de lèvre d'essuyage à activité automatique est prévue pour déplacer ladite au moins une première lèvre d'essuyage (14b-d) et ladite au moins une deuxième lèvre d'essuyage (16b-d) indépendamment l'une de l'autre.

6. Dispositif d'essuyage selon l'une quelconque des revendications précédentes, **caractérisé en ce que** l'unité de remplacement de lèvre d'essuyage (20d) à activité automatique comprend au moins une unité hydraulique (50d).

7. Dispositif d'essuyage selon l'une quelconque des revendications précédentes, **caractérisé en ce que** l'unité de remplacement de lèvre d'essuyage (20d) à activité automatique comprend au moins une unité pneumatique.

8. Dispositif d'essuyage selon l'une quelconque des revendications précédentes, **caractérisé en ce que** l'unité de remplacement de lèvre d'essuyage à activité automatique (20b-c) comprend au moins une unité magnétique (28b-c).

9. Dispositif d'essuyage selon la revendication 8, **caractérisé en ce que** l'unité magnétique (28b-c) est prévue pour déplacer de manière magnétique ladite au moins une première lèvre d'essuyage (14a-g) et/ou ladite au moins une deuxième lèvre d'essuyage (16a-g).

10. Dispositif d'essuyage selon la revendication 9, **caractérisé en ce que** ladite au moins une première lèvre d'essuyage (14c) comprend au moins un élément à mémoire de forme (32c).

11. Dispositif d'essuyage selon la revendication 9 ou 10, **caractérisé en ce que** ladite au moins une deuxième lèvre d'essuyage (16c) comprend au moins un élément à mémoire de forme (34c).
